# EUROPEAN PATENT SPECIFICATION

(11) **EP 3 258 769 B1**
(45) Date of publication and mention of the grant of the patent: **02.12.2020**
(21) Application number: 16704637.4
(22) Date of filing: 16.02.2016
(51) Int. Cl.: A01D 34/416

(54) **COIL OF CUTTING WIRE FOR A VEGETATION CUTTING MACHINE**
SPULE AUS SCHNEIDDRAHT FÜR EINE VEGETATIONSSCHNEIDMASCHINE
BOBINE DE FIL DE COUPE POUR UNE MACHINE DE COUPE DE VÉGÉTATION

(30) Priority: 16.02.2015 EP 15305225
(43) Date of publication of application: 27.12.2017
(73) Proprietor: Speed France S.A.S., 69400 Arnas (FR)
(72) Inventor: LEGRAND, Emmanuel, 01240 St Germain sur Renon (FR)
(74) Representative: Regimbeau
(86) International application number: PCT/EP2016/053218
(87) International publication number: WO 2016/131798

(56) References cited:
- EP-A1- 0 435 795
- EP-A1- 2 454 929
- EP-A1- 2 492 304
- WO-A1-2014/020178
- DE-A1-102007 007 987
- FR-A1- 2 995 501
- US-A- 4 024 635

## Description

### FIELD OF THE INVENTION

The invention relates to a coil of cutting wire for a vegetation cutting machine, a cutting assembly comprising a cutting head and such a coil, and a process of manufacturing such a coil.

### BACKGROUND OF THE INVENTION

Self-supporting coils of cutting wire for vegetation cutting machines are of great interest since they render the insertion and/or replacement of the wire in a cutting head very easy.

In the present text, "self-supporting" means that the wire is capable of remaining coiled on itself, without any holding means external thereto. It is therefore not necessary to lock the turns of the coil by a binding surrounding its turns so as to hold them adjacent, nor by packaging adjusted to the dimensions and format of the coil.

The locking of the turns is temporary, i.e. intended to be effective during storage and shipment of the coil, until its insertion into the cutting head; however, the turns are separable under the effect of a pulling force exerted on the free end of the wire.

Document FR 2 967 548 discloses such a self-supporting coil, which is made of a wire having reciprocal retention provisions such that, when the wire is wound upon itself, each turn cooperates with at least one adjoining turn so as to retain it mechanically.

This wire therefore makes it possible in particular to make a self-supporting coil having a flat shape with a central void.

Such a self-supporting coil can be advantageously used in combination with a cutting head as described in document WO 2014/020178. Said cutting head includes:
- a body defining an inner recess for the coil and provided with a peripheral opening for extending a length of cutting wire separated from the coil, and capable of being driven in rotation by a motor, and
- a central mandrel adapted to support said at least one coil, said mandrel comprising at least one arrangement adapted to cooperate with the coil so as to ensure rotational engagement between the mandrel and the coil, the mandrel being able to turn selectively relative to the body.

When a user wants to insert the self-supporting coil in the cutting head, he merely has to open the cutting head, arrange the central void of the coil around the mandrel, reel off a given length of the wire to extend from the peripheral opening, and close the cutting head.

However, despite attempts to design the reciprocal retention arrangements so as to firmly hold each turn with respect to the other ones, the applicant has found that, under the effect of the centrifugal force, the turns may slide along each other in such a way that the coil tightens up around the mandrel.

A consequence is that the coil is difficult to remove from the cutting head when the user has to replace it with a new coil, because the user has to exert an extraction force that is greater than the insertion force.

In order to avoid such a tightening up of the coil, the cutting head may comprise specific embodiments intended to block the wire and limit the relative sliding of the turns.

For example, as described in document WO 2014/020178, the cutting head may be provided with a locking device for the wire at the peripheral opening. For example, this locking device can have a stud pivoting between a position that frees the wire when the head is not moving and a position locking the wire under the influence of centrifugal force when the head is driven in rotation by the motor. By locking the wire at the opening, the device should thus prevent the turns from sliding along one another under the influence of centrifugal force in the event that the turns are not firmly enough bonded together.

Another possibility described in document WO 2014/020178 is to provide the cutting head with a supporting plate applied onto the coil and that has a rough surface intended to prevent the turns from sliding along one another.

However, despite these arrangements, a certain sliding of the turns along one another is still observed, leading to a tightening up of the coil around the mandrel. As a result, the used coil may be difficult to remove from the mandrel.

Besides, a certain number of cutting heads on the market are provided with a "tap and go" system which makes it possible, after a simple tap against the ground by the lower portion of the cutting head, to automatically reel off a predetermined length of cutting wire, while the machine is operating.

In order to allow such an automatic reeling off of the cutting wire, the bonding strength between the adjacent turns should be minimal; otherwise, the outermost turns would remain attached to one another and the cutting wire could not be paid out of the cutting head.

However, the applicant has found that, irrespective of whether the turns are bonded by reciprocal arrangements as in document FR 2 967 548 or by adhesion as in document US 4,024,635, with such a low bonding strength, the turns may slide along each other under the effect of the centrifugal force, in such a way that the coil tightens up around the mandrel.

### BRIEF DESCRIPTION OF THE INVENTION

A goal of the invention is to remedy to the above-mentioned drawbacks of the existing devices and to render easier the removal of a used coil from the mandrel.

Accordingly, the invention provides a coil of cutting wire for a vegetation cutting machine, wherein the wire is coiled on itself so as to form at least two temporarily bonded turns and a central void, characterized in that at least a part of the innermost turn of the coil is permanently welded to the most adjacent turn.

The innermost turn is welded to the most adjacent turn over an angular sector comprised between 90° and 360°.

According to an embodiment, the innermost turn comprises, on its surface facing the central void, a plurality of grooves.

According to an embodiment, the coil has a flat shape.

Advantageously, the wire is made of a material comprising a polyamide and/or a copolyamide.

The cross section of the wire typically has an area equal to the cross-section of a round wire having a diameter comprised between 1.35 and 4 mm.

According to an embodiment, the coil comprises a plurality of temporarily bonded turns of at least two cutting wires, in particular between four and six cutting wires, bonded longitudinally in a separable fashion.

According to an embodiment, the wire comprises reciprocal retention arrangements so that each turn cooperates with at least one adjacent turn so as to hold it mechanically.

According to an embodiment, the turns are temporarily bonded by adhesion.

According to an embodiment, the turns are temporarily bonded by controlled partial fusion of the material of the wire.

Another object of the invention is a cutting assembly for a vegetation cutting machine such as a border trimmer or a brush cutter, comprising a coil as described above and a cutting head comprising:
- a body defining an inner recess for the coil and provided with a peripheral opening for the emergence of a length of cutting wire separated from the coil, and capable of being driven in rotation by a motor, and
- a central mandrel for supporting said at least one coil, said mandrel comprising at least one arrangement adapted to cooperate with the coil so as to ensure rotational engagement between the mandrel and the coil, the mandrel being able to selectively rotate relative to the body.

Another object of the invention is a process of manufacturing a coil as described above. This process comprises the following steps:
- providing a cutting wire capable of being coiled on itself,
- winding the wire on itself so as to form at least two temporarily bonded turns and a central void,
- heating at least a part of the innermost turn so as to weld it onto the adjacent turn.

According to an embodiment, the welding step further comprises applying a radially outwards pressure onto the innermost turn.

According to an embodiment, the welding step comprises forming a plurality of grooves on the surface of the innermost turn facing the central void.

### BRIEF DESCRIPTION OF THE DRAWINGS

Other features and advantages of the invention will be apparent from the detailed description that follows, based on the appended drawings wherein:
- FIG 1 is a top view of a self-supporting coil before the welding step,
- FIG 2 is a sectional view of the cutting wire according to an embodiment,
- FIG. 3 is a top view of an embodiment of a self-supporting coil wherein the innermost turn has been welded to the most adjacent turn;
- FIG. 4 is a top view of an embodiment of the self-supporting coil wherein the inner surface of the innermost turn has been provided with a plurality of grooves;
- FIG. 5 is a perspective view of an embodiment of a cutting head configured to receive the coil of FIG. 3 or FIG. 4;
- FIG. 6 is a perspective view of an embodiment of a self-supporting coil comprising two wires, wherein the innermost turn has been welded to the most adjacent turn.

### DETAILED DESCRIPTION OF EMBODIMENTS OF THE INVENTION

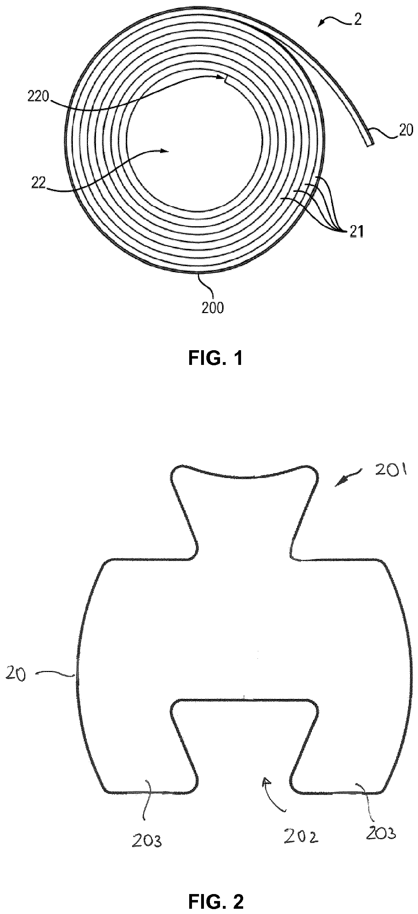

As illustrated in FIG. 1, a cutting wire 20 is profiled and adapted in order to be coiled on itself so as to form a self-supporting coil 2.

By "temporarily bonded" is meant that the bonding strength of the turns is sufficient to have a self-supporting coil, but that the turns can be separated without damaging the wire under the effect of a pulling force exerted on the free end of the wire in view of reeling off a given length of the wire.

By contrast, the term "permanently welded" mentioned below means that the material of the adjacent turns is intimately mixed due to the heat applied during the welding step and that the turns cannot be separated without damaging the wire under the effect of a pulling force exerted on the free end of the wire in view of reeling off a given length of the wire. In other words, when a pulling force is applied by a user so as to reel off the wire, the turns that are temporarily bonded separate from each other but the portion of the turns that are permanently welded cannot be separated.

According to an embodiment, the wire 20 may comprise reciprocal retention arrangements (see FIG. 2) so that each turn 21 cooperates with at least one adjacent turn 21 so as to hold it mechanically, so as to make the coil 2 self-supporting. It is to be noted that FIG. 2 illustrates only one possible embodiment of the cutting wire, whereas the invention covers all forms of retention arrangements adapted to cooperate together mechanically in order to hold the turns of the coil in position, preferably by elastic and/or plastic deformation of the arrangements. One may refer in this regard to the embodiments described in document FR 2 967 548.

According to an embodiment, the reciprocal retention arrangements comprise a male element 201 and a female element 202 extending over all or part of the length of the wire 20, the male element 201 being adapted to penetrate the female element 202 when the wire 20 is coiled on itself so as to form a coil that may be either substantially flat, substantially cylindrical or substantially conical. Advantageously, the female and male elements are chosen so that the wire can be produced by conventional drawing/extrusion techniques.

For example, the male element may be a rib 201 extending over all or part of the length of the wire, while the female element 202 may be a groove extending so as to match the rib. If it is intended to form a flat coil, the rib 201 and the groove 202 preferably extend on opposite longitudinal sides of the wire. In general terms, the shape and dimensions of the rib 201 are adjusted to the shape and dimensions of the groove 202, so that the rib 201 can fit and be held with a suitable force in the groove 202 of an adjacent turn when the wire 20 is coiled on itself so as to form the coil. Preferably, the shape and dimensions of the rib 201 and groove 202 are chosen so that the rib 201 forcibly penetrates the groove 202 in the adjacent turn, with elastic deformation of the wire in the areas 203, when the wire 20 is coiled on itself. In this case, the elastic return of the material of the wire in these areas 203 ensures the holding of the rib 201 and groove 202 once engagement has been effected.

The wire 20 can be uncoiled by extracting the rib 201 from the groove 202. To this end, it suffices to pull with the fingers on the free end of the wire 20 so that the rib 202 causes the lateral walls 203 of the groove 201 to separate.

Alternatively, the turns can be temporarily bonded together by adhesion (for example by means of a chemical or thermal adhesive deposited continuously or discontinuously) between the turns, by localized partial fusion of the material of the cutting wire between two adjoining turns; by ultrasonic or friction welding. In this regard, one may refer to the techniques described in document US 4,024,635.

Any other temporary connection means, that is allowing the turns to be held then separated without damaging the cutting wire, can be used without thereby departing from the scope of the present invention.

A first end 220 of the wire is located within the inner void of the coil, while the second end is a free end designed to emerge from the cutting head.

The cutting wire is made by extrusion of a thermoplastic material through a die defining the shape of the reciprocal retention arrangements.

The thermoplastic material typically comprises a polyamide and/or a copolyamide.

The cutting wire may be made by coextrusion of two or more different thermoplastic materials, e.g. a first material forming a core of the cutting wire and a second material forming a sheath surrounding at least partially the core.

The cross section of the wire has an area equal to the cross-section of a round wire having a diameter comprised between 1.35 and 4 mm, preferably between 1.35 and 2 mm.

The cross section may have any suitable shape providing sufficient contact surfaces between adjacent turns so as to allow a temporary bonding of the turns by adhesion, welding, or mechanical retention. For example, the cross section of the wire may be circular or have any convex polygonal shape (e.g. square, rectangular, triangular, hexagonal, etc.), or be inscribed in one of such shapes.

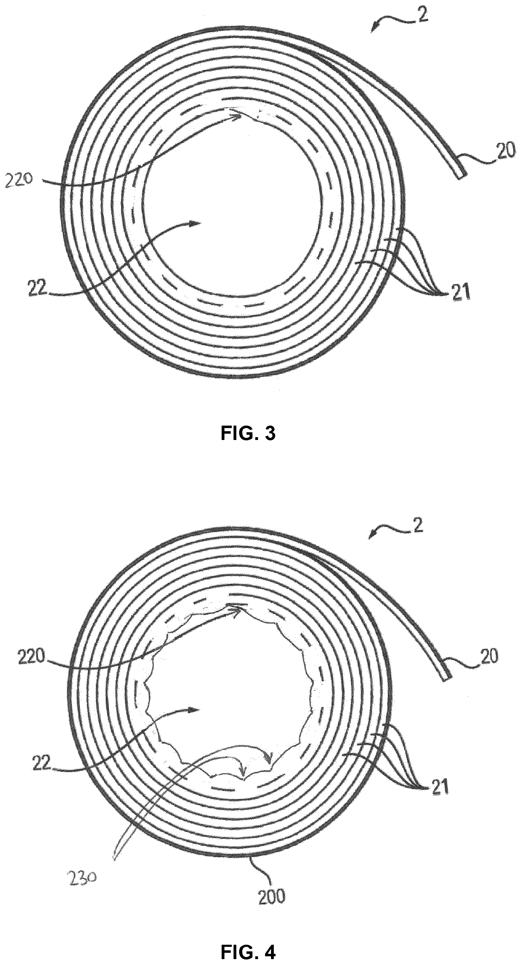

Once the cutting wire has been wound to form the self-supporting coil as shown in FIG. 1, at least part of the innermost turn is permanently welded to the directly adjacent turn (see FIG. 3).

Such a welding may be made by applying heat - and also preferably a radial outwards force - onto the innermost turn and the adjacent turn so as to provoke melting of the thermoplastic material.

Preferably, the innermost turn is welded to the directly adjacent turn over an angular sector of 360°. However, a smaller angular sector may be accepted, e.g. an angular sector of 90° or 180°.

During this operation, the first end 220 of the cutting wire may also be pressed onto the adjacent turn and adopt a flattened shape.

Possibly, more than the two above-mentioned turns may be welded. For example, the turn directly adjacent to the innermost turn may also be welded, on its outer side, to the directly adjacent turn.

In FIG. 3, such a welding is schematically represented by a dotted line.

As compared to the reciprocal retention arrangements, adhesive or other appropriate means that temporarily bind the turns, the welding can be considered as a permanent bonding of the innermost turn and the directly adjacent turns, meaning that these turns are not intended to be separated.

The welding has the effect of blocking both turns relative to each other, which thus prevents any relative sliding of these turns. As a consequence, even if such a sliding occurs with the turns that are only temporarily bonded by the reciprocal retention arrangements, adhesive or other appropriate means, it does not propagate to the innermost turn and thus does not lead to a tightening up of the coil around the mandrel.

Thus, even after significant use, the coil can still be removed easily from the mandrel.

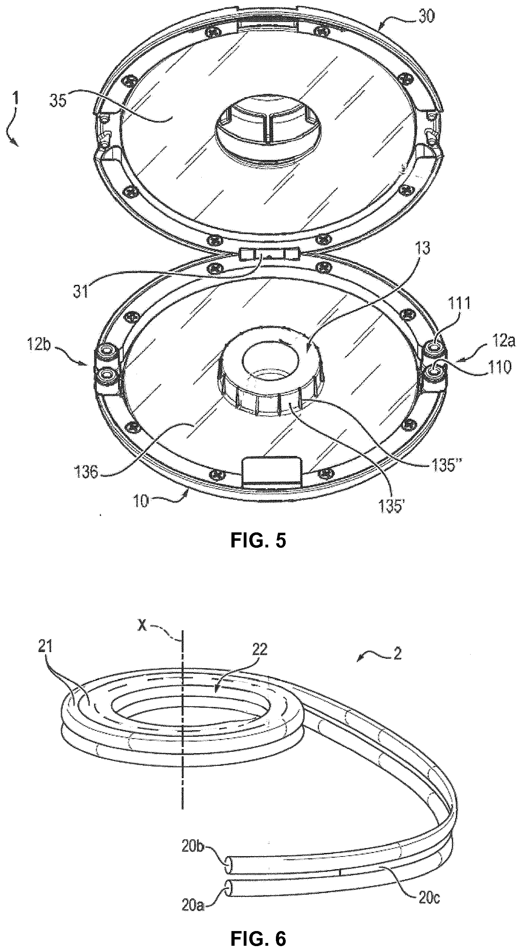

According to an embodiment, the welding step can also comprise shaping the surface of the innermost turn facing the central void so as to form a plurality of grooves 230 therein (see FIG. 4). In this way, the shape of the central void can be adjusted to the external shape of the mandrel. The grooves 230 create a succession of protrusions and recess that extend parallel to the axis of rotation of the mandrel. For example, in the case of a cutting head having a mandrel comprising a plurality of ribs (see FIG. 5), the same number of grooves can be created in the innermost turn so as to cooperate with the ribs and thus improve the rotational engagement between the mandrel and the coil. The shape of the grooves may differ from the design shown in FIG. 4 depending on the geometry of the mandrel.

FIG. 5 illustrates an overview of an open cutting head that may be used in combination with the coil according to the invention.

The coil 2 is set in a recess provided in a body 10 of the cutting head 1. A cover 30 intended to be secured to the body 10 closes the recess. In the embodiment illustrated in FIG. 5, the body and cover are linked by a hinge 31 and further secured by screws (not shown) but this is not intended to be limitative. For example, the cover and body could be secured only by screws.

The body 10 includes at least one opening 12a, 12b which opens into the recess in order to allow the emergence of a length of cutting wire separated from the coil. The openings 12a, 12b are preferably evenly distributed circumferentially; for example, if the openings are two in number, they are advantageously diametrically opposite. Naturally, if more wires are to be used in the cutting head, a sufficient number of openings will be provided.

Moreover, all the openings are not necessarily arranged on the body 10 as illustrated in FIG. 5; the openings can in fact be distributed both on the cover 30 and on the body 10, for example.

According to an embodiment, the inner and outer walls of the recess exhibit, on either side of the opening, a rounded end 110, 111 serving as an abutment surface for the wire during rotation of the cutting head, which limits the risk of breakage at the eyelet, that is breakage of the wire at the opening 12.

The coil is accommodated in the recess on a central mandrel 13 comprising, on its outer surface 135', a plurality of ribs 135". The innermost turn of the coil being forcibly engaged onto the ribs 135", the mandrel 13 and the coil are thereby in rotational engagement.

The mandrel 13 is positioned so as to turn selectively relative to the body 10. What is meant by selectively is that in normal operation of the cutting head, that is when it is driven in rotation by the motor of the cutting machine for the purpose of cutting vegetation, the mandrel 13 is fixed with respect to the body 10, and that it is caused to turn with respect to the body 10 only by an action from a user.

According to an embodiment, the mandrel 13 comprises a supporting plate 136 that extends radially from the peripheral surface 135 and that supports the coil 2. Because of the strain generated during use of the cutting head, the mandrel and the supporting plate are advantageously made of metal. Preferably, the supporting plate is not smooth but instead has a surface having a certain roughness that prevents the coil from sliding. For example, said surface may consist in an increased roughness of the supporting plate 136, or barbs regularly distributed on the surface. In an alternative or complementary way, the supporting plate may be pierced with a plurality of circular holes, distributed according to one or several concentric circles around the axis of rotation of the mandrel 13. Indeed, when the supporting plate 136 is being pierced, the metal that is pushed aside forms around each hole barbs that extend beyond the surface of the plate 136 and that exert a retaining function of the coil. The supporting plate 136 may thus be pierced with a first series of holes distributed along a first circle close to the mandrel 13, and a second series of holes distributed along a second circle close to the periphery of the plate 136.

According to an advantageous embodiment, the cutting head may further comprise a pressuring plate 35 arranged in the cover 30 against a spring (not shown), opposite to the supporting plate 136. Said pressuring plate 35 is intended to be in contact with the coil and, due to the force of the spring, exert a pressure onto the coil when it is in working position within the head. This allows maintaining the coil in a flat position between the supporting plate 136 and the pressuring plate 35, which in turn promotes a better rotational engagement of the coil and the mandrel.

According to an embodiment illustrated in FIG. 6, the coil 2 consists of a plurality of temporarily bonded turns of at least two cutting wires 20a, 20b bonded longitudinally in a separable fashion. In such case, the wires are provided in the form a ribbon wherein the wires are longitudinally bonded in separable fashion, as described for example in document EP 0 435 795. The axis X designates the axis of rotation of the cutting head.

The connection between the two wires 20a, 20b, for example, is obtained by extrusion of a film 20c of the same material as the wires during manufacture of said ribbon. Said film 20c is thin enough to be torn for the purpose of separating the wires 20a, 20b over a certain length.

The ribbon is then being wound to form the turns, the turns 21 being temporarily bonded by the reciprocal retention arrangements.

In other words, the coil has two temporary connections: one between the two wires 20a, 20b over their length; the other between adjoining turns.

Then, the innermost turn of each wire is welded to the directly adjacent turn (and optionally shaped) as already described above.

### REFERENCES

FR 2 967 548
US 4,024,635
WO 2014/020178
EP 0 435 795

## Claims

1. Coil (2) of cutting wire for a vegetation cutting machine, wherein the wire (20) is coiled on itself so as to form at least two temporarily bonded turns (21) and a central void (22), **characterized in that** at least a part of the innermost turn of the coil (2) is permanently welded to the most adjacent turn.

2. Coil according to claim 1, wherein the innermost turn is welded to the most adjacent turn over an angular sector comprised between 90° and 360°.

3. Coil according to one of claims 1 or 2, wherein the innermost turn comprises, on its surface facing the central void, a plurality of grooves (230).

4. Coil according to one of claims 1 to 3, wherein the coil (2) has a flat shape.

5. Coil according to one of claims 1 to 4, wherein the wire (20) is made of a material comprising a polyamide and/or a copolyamide.

6. Coil according to one of claims 1 to 5, wherein the cross section of the wire (20) has an area equal to the cross-section of a round wire having a diameter comprised between 1.35 and 4 mm.

7. Coil according to one of claims 1 to 6, comprising a plurality of temporarily bonded turns of at least two cutting wires (20a, 20b) bonded longitudinally in a separable fashion.

8. Coil according to one of claims 1 to 7, wherein the wire (20) comprises reciprocal retention arrangements (201, 202) so that each turn cooperates with at least one adjacent turn so as to hold it mechanically.

9. Coil according to one of claims 1 to 7, wherein the turns (21) are temporarily bonded by adhesion.

10. Coil according to one of claims 1 to 7, wherein the turns (21) are temporarily bonded by controlled partial fusion of the material of the wire.

11. Cutting assembly for a vegetation cutting machine such as a border trimmer or a brush cutter, said assembly including at least one coil (2) according to one of claims 1 to 10 and a cutting head (1) comprising:
- a body (10) defining an inner recess for the coil (2) and provided with a peripheral opening (12a, 12b) for the emergence of a length of cutting wire separated from the coil, and capable of being driven in rotation by a motor, and
- a central mandrel (13) for supporting said at least one coil (2), said mandrel comprising at least one arrangement (135") adapted to cooperate with the coil (2) so as to ensure rotational engagement between the mandrel and the coil, the mandrel (13) being able to selectively rotate relative to the body (10).

12. Process of manufacturing a coil (2) of cutting wire for a vegetation cutting machine, characterized it comprises the following steps:
- providing a cutting wire (20) capable of being coiled on itself,
- winding the wire (20) on itself so as to form at least two temporarily bonded turns (21) and a central void (22),
- heating at least a part of the innermost turn so as to permanently weld it onto the adjacent turn.

13. Process according to claim 12, wherein the welding step further comprises applying a radially outwards pressure onto the innermost turn.

14. Process according to one of claims 12 or 13, wherein the welding step comprises forming a plurality of grooves (230) on the surface of the innermost turn facing the central void.

## Patentansprüche

1. Rolle (2) Schneidedraht für eine Vegetationsschneidemaschine, wobei der Draht (20) zum Bilden von mindestens zwei temporär gebondeten Windungen (21) und einen zentralen Hohlraum (22) auf sich selbst aufgerollt ist, **dadurch gekennzeichnet, dass** mindestens ein Teil der innersten Windung der Rolle (2) permanent an die nächstliegende Windung angeschweißt ist.

2. Rolle nach Anspruch 1, wobei die innerste Windung über einen Winkelsektor, der zwischen 90° und 360° umfasst ist, an die nächstliegende Windung angeschweißt ist.

3. Rolle nach einem der Ansprüche 1 oder 2, wobei die innerste Windung eine Vielzahl von Rillen (230) auf ihrer Fläche, die dem zentralen Hohlraum zugewandt ist, umfasst.

4. Rolle nach einem der Ansprüche 1 bis 3, wobei die Rolle (2) eine flache Form aufweist.

5. Rolle nach einem der Ansprüche 1 bis 4, wobei der Draht (20) aus einem Material besteht, das ein Polyamid und/oder ein Copolyamid umfasst.

6. Rolle nach einem der Ansprüche 1 bis 5, wobei der Querschnitt des Drahts (20) eine Fläche aufweist, die mit dem Querschnitt eines runden Drahts mit einem Durchmesser zwischen 1,35 und 4 mm übereinstimmt.

7. Rolle nach einem der Ansprüche 1 bis 6, die eine Vielzahl von temporär gebondeten Windungen von mindestens zwei Schneidedrähten (20a, 20b), die auf trennbare Weise in Längsrichtung gebondet sind, umfasst.

8. Rolle nach einem der Ansprüche 1 bis 7, wobei der Draht (20) reziproke Rückhalteanordnungen (201, 202) umfasst, derart, dass jede Windung mit mindestens einer benachbarten Windung zusammenwirkt, um sie mechanisch zu halten.

9. Rolle nach einem der Ansprüche 1 bis 7, wobei die Windungen (21) durch Haftung temporär gebondet sind.

10. Rolle nach einem der Ansprüche 1 bis 7, wobei die Windungen (21) durch gesteuerte teilweise Fusion des Materials des Drahts temporär gebondet sind.

11. Schneideanordnung für eine Vegetationsschneidemaschine, wie etwa einen Randtrimmer oder einen Freischneider, wobei die Anordnung mindestens eine Rolle (2) nach einem der Ansprüche 1 bis 10 und einen Schneidekopf (1) umfasst, der Folgendes umfasst:
- einen Körper (10), der eine innere Ausnehmung für die Rolle (2) definiert und mit einer Umfangsöffnung (12a, 12b) zum Austreten einer Länge Schneidedraht, die von der Rolle getrennt ist, versehen ist und von einem Motor in Drehung angetrieben werden kann, und
- einen zentralen Dorn (13) zum Stützen der mindestens einen Rolle (2), wobei der Dorn mindestens eine Anordnung (135") umfasst, die angepasst ist, mit der Rolle (2) zusammenzuwirken, um den Dreheingriff zwischen dem Dorn (13) und der Rolle sicherzustellen, wobei der Dorn relativ zum Körper (10) selektiv gedreht werden kann.

12. Verfahren zum Herstellen einer Rolle (2) Schneidedraht für eine Vegetationsschneidemaschine, gekennzeichnet, sie umfasst die folgenden Schritte:
- Bereitstellen eines Schneidedrahts (20), der auf sich selbst aufgerollt werden kann,
- Wickeln des Drahts (20) zum Bilden von mindestens zwei temporär gebondeten Windungen (21) und einem zentralen Hohlraum (22) um sich selbst,
- Erwärmen mindestens eines Teils der innersten Windung, um sie permanent an die benachbarte Windung anzuschweißen.

13. Verfahren nach Anspruch 12, wobei der Schritt des Schweißens ferner das Ausüben eines radialen Auswärtsdrucks auf die innerste Windung umfasst.

14. Verfahren nach einem der Ansprüche 12 oder 13, wobei der Schritt des Schweißens das Bilden einer Vielzahl von Rillen (230) auf der Fläche der innersten Windung, die dem zentralen Hohlraum zugewandt ist, umfasst.

## Revendications

1. Bobine (2) de fil de coupe pour une machine de coupe de végétation, dans laquelle le fil (20) est enroulé sur lui-même afin de former au moins deux spires temporairement jointives (21) et un vide central (22), **caractérisée en ce qu'**au moins une partie de la spire située le plus à l'intérieur de la bobine (2) est soudée de manière permanente à la spire la plus adjacente.

2. Bobine selon la revendication 1, dans laquelle la spire située le plus à l'intérieur est soudée à la spire la plus adjacente sur un secteur angulaire compris entre 90° et 360°.

3. Bobine selon l'une des revendications 1 ou 2, dans laquelle la spire située le plus à l'intérieur comprend, sur sa face orientée vers le vide central, une pluralité de rainures (230).

4. Bobine selon l'une des revendications 1 à 3, dans laquelle la bobine (2) a une forme plate.

5. Bobine selon l'une des revendications 1 à 4, dans laquelle le fil (20) est réalisé avec un matériau comprenant un polyamide et/ou un copolyamide.

6. Bobine selon l'une des revendications 1 à 5, dans laquelle la section transversale du fil (20) a une surface égale à la section transversale d'un fil rond ayant un diamètre compris entre 1,35 et 4 mm.

7. Bobine selon l'une des revendications 1 à 6, comprenant une pluralité de spires temporairement jointives d'au moins deux fils de coupe (20a, 20b) reliés longitudinalement d'une manière séparable.

8. Bobine selon l'une des revendications 1 à 7, dans laquelle le fil (20) comprend des agencements de retenue réciproques (201, 202) de sorte que chaque spire coopère avec au moins une spire adjacente afin de la maintenir mécaniquement.

9. Bobine selon l'une des revendications 1 à 7, dans laquelle les spires (21) sont temporairement reliées par adhérence.

10. Bobine selon l'une des revendications 1 à 7, dans laquelle les spires (21) sont temporairement reliées par fusion partielle contrôlée du matériau du fil.

11. Ensemble de coupe pour une machine de coupe de végétation telle qu'un taille-bordures ou une débroussailleuse, ledit ensemble comprenant au moins une bobine (2) selon l'une des revendications 1 à 10 et une tête de coupe (1) comprenant :
- un corps (10) définissant un évidement interne pour la bobine (2) et pourvu d'une ouverture périphérique (12a, 12b) pour l'émergence d'une longueur de fil de coupe séparée de la bobine, et pouvant être entraîné en rotation par un moteur, et
- un mandrin central (13) pour supporter ladite au moins une bobine (2), ledit mandrin comprenant au moins un agencement (135") adapté pour coopérer avec la bobine (2) afin de garantir la mise en prise rotative entre le mandrin et la bobine, le mandrin (13) étant apte à tourner sélectivement par rapport au corps (10).

12. Procédé pour fabriquer une bobine (2) de fil de coupe pour une machine de coupe de végétation, **caractérisé en ce qu'**il comprend les étapes suivantes :
- fournir un fil de coupe (20) pouvant être enroulé sur lui-même,
- enrouler le fil (20) sur lui-même afin de former au moins deux spires temporairement jointives (21) et un vide central (22),
- chauffer au moins une partie de la spire située le plus à l'intérieur afin de la souder de manière permanente sur la spire adjacente.

13. Procédé selon la revendication 12, dans lequel l'étape de soudage comprend en outre l'application d'une pression radialement externe sur la spire située le plus à l'intérieur.

14. Procédé selon l'une des revendications 12 ou 13, dans lequel l'étape de soudure comprend la formation d'une pluralité de rainures (230) sur la surface de la spire située le plus à l'intérieur orientée vers le vide central.
